# EUROPÄISCHE PATENTANMELDUNG

(11) **EP 4 647 681 A2**
(43) Veröffentlichungstag der Anmeldung: **12.11.2025**
(21) Anmeldenummer: 25204992.9
(22) Anmeldetag: 27.08.2019
(51) Int. Cl.: F24T 10/17

(54) **GEOTHERMISCHE VORRICHTUNG UND VERFAHREN**

(62) Teilanmeldung aus: 19761812.7
(71) Anmelder: Bartz, Jörgen, 25560 Schenefeld (DE)
(72) Erfinder: Bartz, Jörgen, 25560 Schenefeld (DE)
(74) Vertreter: Andresen, Heiko

(57) **Zusammenfassung**

Die Erfindung betrifft eine Vorrichtung und ein Verfahren zur Erzeugung elektrischer Energie oder zur Gewinnung von Wärme aus geothermischer Energie, umfassend zumindest eine Erdwärmesonde und zumindest einen Energiewandler, insbesondere wobei ein Arbeitsmedium der Erdwärmesonde auch ein Arbeitsmedium des Energiewandlers ist.

## Beschreibung

### GEBIET DER ERFINDUNG

Die Erfindung betrifft eine Erdwärmesonde, einen Energiewandler, eine Vorrichtung und ein Verfahren zur Erzeugung elektrischer Energie oder zur Gewinnung von Wärme aus geothermischer Energie.

### TECHNISCHER HINTERGRUND

Geothermische Anlagen werden zur Energie- und/oder Wärmegewinnung verwendet. Solche Anlagen weisen einen unterirdischen Teil mit einer Erdwärmesonde auf. Innerhalb der Erdwärmesonde zirkuliert ein Arbeitsmedium, das durch die geothermische Energie, die das die Erdwärmesonde umgebende Erdreich aufweist, erhitzt und verdampft. Das verdampfte Arbeitsmedium wird einem Energiewandler zugeführt, um daraus elektrische Energie oder Wärme zu gewinnen. Bestehende Erdwärmesonden haben üblicherweise eine kreisrunde Querschnittsfläche, so dass die Wärmestrahlung bzw. Wärmeleitung des die Erdwärmesonde umgebenden Gesteins bzw. Erdreichs begrenzt ist.

Vielfach machen bestehende geothermische Vorrichtungen zur Energiegewinnung von Energiewandlern Gebrauch, die mechanisch gesteuerte Kolben aufweisen. Eine Anpassung an jeweilige Arbeitsbedingungen zur Effizienzoptimierung ist dann nicht ohne aufwendige Umbauten möglich, wodurch die Anzahl der realisierbaren Betriebsstunden pro Jahr verringert wird.

### ZUSAMMENFASSUNG

Es ist eine Aufgabe der Erfindung, die Nachteile der bekannten Erdwärmesonden, der bekannten Energiewandler und der bekannten geothermischen Vorrichtungen und Verfahren auszuräumen oder zumindest zu verringern. Die Aufgabe wird erfindungsgemäß durch die Gegenstände der unabhängigen Patentansprüche gelöst.

Es wird unter anderem eine Erdwärmesonde, ein Energiewandler, eine Vorrichtung umfassend zumindest eine Erdwärmesonde und zumindest einen Energiewandler sowie ein Verfahren, das von einer entsprechenden Vorrichtung Gebrauch macht, bereitgestellt.

Die Erdwärmesonde kann einen koaxialen Rohrstrang umfassen. Der koaxiale Rohrstrang kann zumindest teilweise von einem Arbeitsmedium durchströmt sein. Zumindest ein Teil des Rohrstrangs kann einen kohlenstofffaserverstärkten Werkstoff umfassen oder aus diesem gefertigt sein. Der kohlenstofffaserverstärkte Werkstoff (Carbon, Kohlenstofffasern, Kohlefasern, CFK) ermöglicht es, dass der koaxiale Rohrstrang gegenüber herkömmlichen Materialien (z.B. Stahl) vorteilhaft ein verringertes Gewicht aufweist. Dadurch können die Anforderungen an die zum Ablassen des Rohrstrangs in das Bohrloch genutzte Absenkmechanik vorteilhaft verringert werden.

Kohlenstofffasern weisen zudem eine sehr niedrige Wärmeleitfähigkeit von 17 W/mK auf. Deshalb können Wärmeverluste vorteilhaft verringert werden bzw. Isolationseigenschaften verbessert werden.

Der koaxiale Rohrstrang kann zumindest einen Abschnitt umfassen, der eine sternförmige Querschnittsfläche mit abgerundeten Zacken und Senken aufweist. Insbesondere kann eine Außenkontur des Rohrstrangs die beschriebene Form aufweisen. Die Außenkontur des Rohrstrangs kann auch eine andere Form umfassen, die verglichen mit einer kreisrunden Form eine effektiv vergrößerte Außenoberfläche aufweist. Die Außenkontur dieses Abschnitts kann im Wesentlichen einer Sternform mit zumindest drei Zacken (Vorsprüngen) entsprechen, wobei die Zacken und die zwischen den Zacken angeordneten Senken (Einbuchtungen) des Sterns abgerundet sind. Die Sternform kann vorteilhaft auch mehr Zacken und Senken umfassen, insbesondere fünf Zacken, weiter insbesondere sieben Zacken, weiter insbesondere neun Zacken, weiter insbesondere im Wesentlichen acht Zacken. Die durch diesen Abschnitt des Rohrstrangs aufgenommene Wärmeleistung hängt proportional von der Außenoberfläche des Abschnitts des Rohrstrangs ab. Da die Sternform eine Vergrößerung der Außenoberfläche des Abschnitts des Rohrstrangs bewirkt, kann deshalb die von diesem Abschnitt des Rohrstrangs aufgenommene Wärmeleistung gegenüber einer herkömmlichen Form (z.B. einer kreisrunden Form) vorteilhaft vergrößert werden.

Der koaxiale Rohrstrang kann zumindest einen ersten Abschnitt und einen zweiten Abschnitt umfassen. Der erste Abschnitt kann im Wesentlichen vertikal angeordnet sein und den kohlenstofffaserverstärkten Werkstoff umfassen. Der zweite Abschnitt kann im Wesentlichen horizontal angeordnet sein. Das Arbeitsmedium wird in der Nähe der Erdoberfläche mit einer ersten Temperatur in den koaxialen Rohrstrang eingefüllt. Anschließend erhöht sich die Temperatur des Arbeitsmediums kontinuierlich auf dem Weg zum Ende des Rohrstrangs. Am Ende weist das Arbeitsmedium eine im Vergleich zur ersten Temperatur höhere zweite Temperatur auf. Anschließend soll das Arbeitsmedium die zweite Temperatur auf dem Rückweg in die Nähe der Erdoberfläche möglichst konstant beibehalten. Daher ist eine Änderung der Temperatur des Arbeitsmediums im ersten Abschnitt des koaxialen Rohrstrangs, der sich vom Startpunkt in der Nähe der Erdoberfläche aus in im Wesentlichen vertikaler Richtung erstreckt, unerwünscht. Da der erste Abschnitt des koaxialen Rohrstrangs den kohlenstofffaserverstärkten Werkstoff umfassen kann oder im Wesentlichen aus diesem gefertigt sein kann, weist dieser Abschnitt vorteilhafterweise besonders gute thermische Isolationseigenschaften auf. Dadurch kann eine Temperaturreduktion des rückfließenden Arbeitsmediums vorteilhaft verhindert oder, zumindest gegenüber anderen Materialien, verringert werden. Das bedeutet, dass eine Änderung der Temperatur des Arbeitsmediums vorteilhaft verhindert werden kann, oder, gegenüber gewöhnlichen Rohrsträngen aus anderen Werkstoffen, zumindest verringert werden kann.

Der erste Abschnitt des Rohrstrangs kann eine Länge von wenigstens 100 m aufweisen, insbesondere mehr als 500 m, weiter insbesondere mehr als 1000 m, weiter insbesondere mehr als 3000 m, weiter insbesondere mehr als 5000 m. Der zweite Abschnitt des Rohrstrangs kann in einer Tiefe von wenigstens 1000 m angeordnet sein, weiter insbesondere mehr als 3000 m, weiter insbesondere mehr als 5000 m, weiter insbesondere im Wesentlichen 6000 m oder mehr. Der zweite Abschnitt kann eine Länge von mehr als 500 m aufweisen, weiter insbesondere mehr als 1000 m, weiter insbesondere mehr als 2000 m, weiter insbesondere im Wesentlichen 3000 m oder mehr.

Der erste Abschnitt und der zweite Abschnitt des koaxialen Rohrstrangs können durch einen dazwischen angeordneten, eine Krümmung aufweisenden, dritten Abschnitt des koaxialen Rohrstrangs verbunden sein. Der Radius der Krümmung des dritten Abschnitts kann zumindest 50 m betragen, insbesondere 100 m, weiter insbesondere 200 m, weiter insbesondere 400 m, weiter insbesondere zumindest 600 m oder mehr. Der gekrümmte dritte Abschnitt des Rohrstrangs ermöglicht vorteilhafterweise eine kontinuierliche Verbindung des ersten Abschnitts mit dem zweiten Abschnitt, obwohl eine Längserstreckungsachse des ersten (vertikalen) Abschnitts mit einer Längserstreckungsachse des zweiten (horizontalen) Abschnitts einen Winkel von mehr als 20° einschließen kann, insbesondere mehr als 40°, weiter insbesondere mehr als 60°, weiter insbesondere mehr als 80°, weiter insbesondere im Wesentlichen 90°.

Der koaxiale Rohrstrang kann zumindest ein zentrales Steigrohr und ein koaxial angeordnetes Fallrohr umfassen. Das Fallrohr kann das Steigrohr umgeben. Zwischen dem Steigrohr und dem Fallrohr kann ein Ringspalt angeordnet sein. Der Abstand zwischen dem Steigrohr und dem Fallrohr kann durch Abstandhalter gewährleistet sein. Das Fallrohr kann am unteren Ende des Rohrstrangs durch zumindest eine Überströmöffnung mit dem koaxial angeordneten Steigrohr fluidisch verbunden sein. Der Öffnungsquerschnitt der Überströmöffnung kann kleiner sein als eine Querschnittsfläche des Steigrohrs. Dadurch kann gewährleistet werden, dass sich das verdampfte Arbeitsmedium stets in Strömungsrichtung ausbreitet und nicht wieder in das Fallrohr eintritt. Es können auch mehr Überströmöffnungen vorhanden sein. Die Überströmöffnungen können umfänglich am Steigrohr angeordnet sein. Die Überströmöffnungen können abgerundet sein, um den Strömungswiderstand zu verringern. Das Fallrohr kann zumindest teilweise mit dem Arbeitsmedium befüllt sein, das zumindest in einem Teil des Fallrohrs in flüssiger Form vorliegen kann. Das Arbeitsmedium kann dann, auf dem Weg zum Endabschnitt des Rohrstrangs, durch die geothermische Energie des den Rohrstrang umgebenden Erdreichs kontinuierlich erwärmt werden. Insbesondere kann das Arbeitsmedium derart stark erhitzt werden, dass es verdampft. Das Arbeitsmedium kann zumindest in einem Teil des Steigrohrs als Gas vorliegen. Die koaxiale Anordnung von Steigrohr und Fallrohr ermöglicht eine kompakte Ausführung des Rohrstrangs, so dass vorteilhafterweise lediglich ein einziges Bohrloch benötigt wird.

Der Rohrstrang kann die sternförmige Querschnittsfläche mit abgerundeten Zacken und Senken im zweiten Abschnitt umfassen, also insbesondere im horizontal angeordneten Abschnitt des Rohrstrangs. Das koaxial angeordnete Fallrohr kann eine Außenkontur entsprechend der Sternform und eine kreisrunde Innenkontur umfassen. Das im koaxialen Rohrstrang zentrisch angeordnete Steigrohr kann eine kreisrunde Außenkontur umfassen, wobei der Durchmesser des Steigrohrs gegenüber dem Innendurchmesser des Fallrohrs verringert ist, so dass sich zwischen beiden der Ringspalt ergibt.

Das Fallrohr und/oder das Steigrohr umfassen jeweils zumindest zwei miteinander verbundene Rohrstücke. Die Rohrstücke können eine Länge von im Wesentlichen 12 m aufweisen. Die Übergänge der Rohrstücke des Fallrohrs können gegenüber den Übergängen der Rohrstücke des Steigrohrs versetzt sein. Dadurch kann die Montage vorteilhaft vereinfacht werden. Die Rohrstücke können gas- und/oder flüssigkeitsdicht miteinander verbunden sein.

Zumindest ein Teil des Rohrstrangs und/oder das Fallrohrs und/oder des Steigrohrs kann eine Beschichtung aufweisen. Die Beschichtung kann zumindest eine aus einem Korrosionsschutz, einer thermischen Isolationsschicht, einer Verspiegelung und einer DLC-Schicht ("diamond like carbon") umfassen. Dadurch können die thermische Isolierung und/oder die Anti-Korrosionsbeständigkeit und/oder der Widerstand bei der Montage (wenn das Innenrohr in das Außenrohr eingeführt wird) und/oder der Widerstand für das in dem Rohrstrang zirkulierende Arbeitsmedium verbessert werden.

Das Arbeitsmedium kann mindestens eine als Kältemittel geeignete Verbindung enthalten oder aus einer oder mehreren solchen Verbindungen bestehen. Insbesondere kann das Arbeitsmedium Wasser und Additive umfassen. Die Additive können einen Korrosionsschutz umfassen. Die Additive können derart eingerichtet sein, dass sie die Wärmekapazität des Arbeitsmediums vorteilhaft erhöhen. Das Arbeitsmedium kann durch die Additive einen höheren Siedepunkt als Wasser haben, so dass es nicht vorzeitig schon im Fallrohr verdampft. Das Arbeitsmedium und der Rohrstrang können derart eingerichtet sein, dass sich verschiedene hydrostatische Drücke im Fallrohr und dem Steigrohr einstellen. Diese Druckdifferenz kann vorteilhaft eine selbstständige Umwälzung des Arbeitsmediums in dem Rohrstrang bewirken. Optional kann die Umwälzung des Arbeitsmediums durch eine Pumpe oder einen Verdichter unterstützt werden.

Der Rohrstrang kann gegenüber dem Bohrloch und/oder gegenüber dem das Bohrloch umgebenden Erdreich abgedichtet sein. Zumindest ein Teil des Rohrstrangs und/oder des Fallrohrs und/oder des Steigrohrs kann als doppelwandiges Rohr ausgebildet sein.

Der Ringspalt kann zumindest in einem Abschnitt ein thermisches Isolationsmaterial umfassen. Der Ringspalt kann zumindest in einem Abschnitt zur Isolierung des Steigrohrs gegenüber dem Fallrohr ein Vakuum umfassen. Das Fallrohr kann zumindest in einem Abschnitt, insbesondere einem oberflächennahen Abschnitt, als Wärmeisolierrohr ausgebildet sein, um ein Abkühlen des zurückgeführten Arbeitsmediums vorteilhaft zu verhindern bzw. zu verringern.

Der Rohrstrang und das Arbeitsmedium können derart eingerichtet sein, dass das Arbeitsmedium am unteren Ende (Endstück, Fußstück), im Bereich der fluidischen Verbindung von Fallrohr und Steigrohr, eine Temperatur von mehr als 100°C besitzt, insbesondere mehr als 120°C, insbesondere mehr als 140°C, insbesondere mehr als 160°C, insbesondere im Wesentlichen 170°C oder höher. Der Rohrstrang kann zudem derart eingerichtet sein, insbesondere durch die verschiedenen Maßnahmen zur thermischen Isolation, dass das Arbeitsmedium am oberen Ende (Anfangsstück, Kopfstück) des Steigrohrs in der Nähe der Erdoberfläche eine Temperatur von mehr als 60°C besitzt, insbesondere mehr als 80°C, insbesondere mehr als 100°C, insbesondere mehr als 120°C, insbesondere im Wesentlichen 130°C oder höher.

Die Erdwärmesonde bzw. der Rohrstrang kann einen konstanten Außendurchmesser aufweisen. Der Rohrstrang kann derart eingerichtet sein, dass das Steigrohr und/oder das Fallrohr jeweils einen gleichbleibenden Durchmesser aufweisen.

Die Erdwärmesonde kann in dem Bohrloch schwimmend angeordnet sein. In dem Bohrloch kann eine Substanz angeordnet sein, beispielsweise Wasser. Die Substanz kann es ermöglichen, dass der in das Bohrloch abgelassene Rohrstrang beim Eindringen in die Substanz Auftriebskräfte bewirkt. Dadurch kann das zu tragende Gewicht während des Absenkvorgangs des Rohrstrangs vorteilhaft verringert werden. Die in dem Bohrloch befindliche Substanz kann auch der Stabilität des Bohrlochs dienen, da sie eine Gegenkraft zu den auf das Bohrloch einwirkenden Kräften (z.B. vom umgebenden Erdreich) ausüben kann.

Die Erdwärmesonde kann ein Kopfstück umfassen, das mehrere Einlässe und/oder Auslässe aufweist. Die Einlässe und/oder Auslässe können umfänglich am Kopfstück angeordnet sein. Die Einlässe und/oder Auslässe bzw. die Übergänge zum koaxial angeordneten Fallrohr und/oder dem zentralen Steigrohr können strömungsoptimiert ausgebildet sein. Die Übergänge können abgerundet sein. Eine Gesamtöffnungsfläche der Auslässe kann größer sein als eine Querschnittsfläche des Steigrohrs.

Der Energiewandler kann einen Wärmetauscher umfassen. Der Energiewandler kann auch eine Expansionsmaschine (Kolbenmaschine) umfassen. Der Energiewandler kann auch im Wesentlichen aus einer Expansionsmaschine bestehen. Der Wärmetauscher kann ein erstes und ein zweites Arbeitsmedium umfassen, die Wärme austauschen. Das Arbeitsmedium, welches in einer Erdwärmesonde der zuvor beschriebenen Art angeordnet ist, kann das erste Arbeitsmedium des Wärmetauschers sein. Das zweite Arbeitsmedium kann einen niedrigen Siedepunkt haben, insbesondere einen niedrigeren Siedepunkt als Wasser, so dass ein hoher Dampfdruck bei verhältnismäßig geringen Temperaturen erreichbar ist. Das zweite Arbeitsmedium des Wärmetauschers kann Kohlendioxid und ggf. Additive umfassen. Die Expansionsmaschine kann zumindest einen Zylinder mit einem beweglich gelagerten Kolben umfassen. Der Kolben kann durch das zweite Arbeitsmedium beweglich sein. Der sich bewegende Kolben kann vorteilhafterweise einen Generator zur Gewinnung elektrischer Energie antreiben. Optional kann der Generator oder die mechanische Verbindung zwischen Kolben und Generator ein Getriebe umfassen.

Das bedeutet, dass das erste Arbeitsmedium in kalter flüssiger Form in das Fallrohr des Rohrstrangs eingefüllt wird. Dann kann das erste Arbeitsmedium auf dem Weg zum unteren Ende des Rohrstrangs kontinuierlich erhitzt werden. Wird der Siedepunkt überschritten, verdampft das erste Arbeitsmedium. Am untersten Ende des Rohrstrangs wird das erste Arbeitsmedium durch das Steigrohr in Richtung Wärmetauscher abgeführt. Im Wärmetauscher gibt das erste Arbeitsmedium seine Wärme an das ebenfalls im Wärmetauscher befindliche zweite Arbeitsmedium ab und kühlt dadurch ab. Die Temperatur des ersten Arbeitsmediums kann dadurch im Wesentlichen um etwa 30°C absinken. Es können mehrere derartige Wärmetauscher parallel und/oder kaskadiert (angereiht) angeordnet sein. Durch jeden der Wärmetauscher kann die Temperatur des ersten Arbeitsmediums im Wesentlichen um etwa 30°C absinken. Es können insbesondere derart viele Wärmetauscher vorgesehen sein, dass die Temperatur des ersten Wärmetauschers auf im Wesentlichen 0°C oder darunter absinkt. Anschließend wird das erste Arbeitsmedium wiederum in das Fallrohr des Rohrstrangs eingefüllt. Das zweite Arbeitsmedium wird durch das erste Arbeitsmedium im Wärmetauscher erhitzt, insbesondere auf eine Temperatur von im Wesentlichen 30°C. Das zweite Arbeitsmedium kann im Wärmetauscher derart erhitzt werden, dass es verdampft. Dabei kann ein Druck von mehr als 20 bar entstehen, insbesondere mehr als 40 bar, weiter insbesondere mehr als 50 bar, weiter insbesondere mehr als 60 bar, weiter insbesondere im Wesentlichen 70 bar. Das verdampfte zweite Arbeitsmedium kann dann zur Expansionsmaschine geleitet werden und durch einen elektronischen Einlass in einen Zylinderraum eingelassen werden. Wegen des Drucks kann das zweite Arbeitsmedium dann einen sich in dem Zylinder befindlichen Kolben bewegen. Durch die Bewegung des Kolbens kann sich das von dem zweiten Arbeitsmedium eingenommene Volumen vergrößern. Diese Expansion kann eine Abnahme der Temperatur und des Drucks des zweiten Arbeitsmediums bewirken. Das zweite Arbeitsmedium kann mittels eines elektronischen Auslasses aus dem Zylinderraum entnommen werden, wobei es einen Restdruck von mehr als 5 bar aufweisen kann, insbesondere mehr als 10 bar, weiter insbesondere mehr als 20 bar, weiter insbesondere mehr als 30 bar, weiter insbesondere im Wesentlichen 34 bar. Die Temperatur des zweiten Arbeitsmediums kann sich auf im Wesentlichen 0°C verringert haben. Das zweite Arbeitsmedium kann in der Expansionsmaschine auch derart stark entspannt werden, dass es eine Temperatur kleiner als 0°C aufweist. Anschließend kann das zweite Arbeitsmedium wieder dem Wärmetauscher zugeführt werden.

Innerhalb des Wärmetauschers sind die Kreisläufe des ersten und zweiten Arbeitsmediums derart voneinander getrennt, dass sich die Arbeitsmedien nicht gegenseitig verunreinigen (hermetische Trennung).

Der Energiewandler kann eine vollelektronische Motorsteuerung umfassen. Die vollelektronische Motorsteuerung kann eingerichtet sein, um einen elektronischen Einlass und einen elektronischen Auslass des Zylinders zu steuern. Die vollelektronische Motorsteuerung kann auch eingerichtet sein, um eine zurücklegbare Wegstrecke des Kolbens festlegen zu können. Die Motorsteuerung kann eingerichtet sein, um Steuersignale (z.B. Schaltzeiten) bereitzustellen, basierend auf denen Ventile den elektronischen Einlass und/oder den elektronischen Auslass des Zylinders freigeben. Die vollelektronische Motorsteuerung ermöglicht, die Präzision der Steuerung der Ventile an dem elektronischen Einlass und/oder dem elektronischen Auslass zu verbessern. Beispielsweise können vorteilhafterweise kürzere Schaltzeiten realisiert werden. Zudem kann eine mechanische Verbindung (z.B. mittels einer Nockenwelle) vermieden werden. Da das Arbeitsmedium unter sehr hohem Druck steht, ist eine präzise Steuerung des elektronischen Einlasses und/oder des elektronischen Auslasses besonders vorteilhaft, um einen hohen Wirkungsgrad zu erzielen.

Der Zylinder und/oder der Kolben können zur Verbesserung der Gleiteigenschaften beschichtet sein. Beispielsweise können sie eine DLC-("diamond like carbon")-Beschichtung umfassen, so dass die Reibung zwischen den beweglichen Oberflächen verringert wird.

Der Energiewandler kann eingerichtet sein, um mittels Magnetismus einen Stillstand des Kolbens in Folge eines kritischen Betriebszustands des Kolbens zu verhindern. Der Kolben kann zum Stillstand kommen, wenn es nur eine ungenügende Druckdifferenz zwischen dem elektronischen Einlass und dem Zylinderraum oder dem Zylinderraum und dem elektronischen Auslass geben sollte. Generell kann die Druckdifferenz zwischen dem elektronischen Einlass und dem elektronischen Auslass der Expansionsmaschine durch ein Expansionsventil gewährleistet sein. Zusätzlich kann der Energiewandler zur Vermeidung eines kritischen Betriebszustands zumindest ein Paar zusammenwirkender korrespondierender Magnete umfassen. Beispielsweise kann der Kolben mit einer Kurbelwelle mechanisch verbunden sein. Die Kurbelwelle kann ein Schwungrad umfassen, an dem ein erster Magnet angeordnet ist. Ein zweiter Magnet kann an einem Gehäuseteil des Energiewandlers bzw. der Expansionsmaschine angeordnet sein. Die Magnete können derart Zusammenwirken, dass die Bewegung der Kurbelwelle und/oder des Kolbens unterstützt wird, so dass ein ungewollter Stillstand des Kolbens vorteilhafterweise verhindert wird. Die vollelektronische Motorsteuerung kann eingerichtet sein, um bei diesem Sicherheitsmechanismus zu unterstützen, z.B. durch veränderbare Schaltzeiten der Ventile.

Das zweite Arbeitsmedium kann derart innerhalb des Wärmetauschers erhitzt werden und derart in der Expansionsmaschine durch Verrichtung von Arbeit an dem Kolben abgekühlt werden und eine Wegstrecke des Kolbens kann derart eingerichtet sein, dass ein mittlerer Kolbendruck wenigstens 30 bar beträgt, insbesondere wobei der mittlere Kolbendruck wenigstens 40 bar beträgt, weiter insbesondere wobei der mittlere Kolbendruck wenigstens 50 bar beträgt, weiter insbesondere wobei der mittlere Kolbendruck im Wesentlichen 52 bar beträgt. Der hohe mittlere Kolbendruck kann insbesondere durch die Wahl des Arbeitsmediums und den erzielbaren Dampfdruck bestimmt sein. Dadurch können die Nutzleistung, das Drehmoment und der erreichbare Wirkungsgrad des so eingerichteten Energiewandlers gegenüber einem herkömmlichen Verbrennungsmotor vorteilhaft erhöht werden.

Der Kolben kann zumindest einen geschlossenen Kolbenring aufweisen. Der Kolben kann auch eine Mehrzahl an geschlossenen Kolbenringen aufweisen. Der Kolben kann auch ausschließlich geschlossene Kolbenringe aufweisen. Alternativ kann der Kolben, insbesondere eine äußere Lauffläche des Kolbens, derart an den Zylinder, insbesondere eine zur Lauffläche des Kolbens korrespondierende innere Lauffläche des Zylinders, angepasst sein, dass der Kolben keinen Kolbenring benötigt. Beide Maßnahmen ermöglichen es vorteilhaft, die Verluste, die durch Austritt zumindest einer Teilmenge des zweiten Arbeitsmediums bedingt wären, zu reduzieren. Beide Maßnahmen unterstützen bei der Realisierung der effektiv sehr hohen Drücke des zweiten Arbeitsmediums, beziehungsweise des mittleren Kolbendrucks, im Zylinderraum. Deshalb kann der Wirkungsgrad der Expansionsmaschine vorteilhaft verbessert werden.

Der Energiewandler kann mehrere Wärmetauscher umfassen. Die Expansionsmaschine kann mehrere Zylinder und darin beweglich angeordnete Kolben umfassen. Die Expansionsmaschine kann auch eine Mehrfach-Expansionsmaschine mit mehreren Zylindern sein.

Die Vorrichtung zur Erzeugung elektrischer Energie oder zur Gewinnung von Wärme aus geothermischer Energie kann zumindest eine Erdwärmesonde und zumindest einen Energiewandler umfassen. Die Vorrichtung kann mehrere Erdwärmesonden der beschriebenen Art umfassen, insbesondere mehr als 3, weiter insbesondere mehr als 5, weiter insbesondere mehr als 7, weiter insbesondere mehr als 10, weiter insbesondere mehr als 15, weiter insbesondere mehr als 20. Die Vorrichtung kann auch mehrere Energiewandler umfassen.

Das Verfahren zur Erzeugung elektrischer Energie oder zur Gewinnung von Wärme aus geothermischer Energie kann eine Vorrichtung und/oder eine Erdwärmesonde und/oder einen Energiewandler nach der zuvor beschriebenen Art umfassen. Gemäß dem Verfahren kann ein erstes Arbeitsmedium mit Hilfe einer Erdwärmesonde durch geothermische Energie erhitzt und verdampft werden. Das erste Arbeitsmedium kann die so gewonnene Energie mittels eines Wärmetauschers an ein von dem ersten Arbeitsmedium verschiedenes zweites Arbeitsmedium abgeben und dieses erhitzen. Das zweite Arbeitsmedium kann zur Verrichtung von Arbeit am Kolben einer Expansionsmaschine genutzt werden, wobei aufgrund der Kolbenbewegung elektrische Energie generiert werden kann.

### KURZE BESCHREIBUNG DER ZEICHNUNGEN

- Fig. 1 zeigt eine vereinfachte schematische Darstellung einer Erdwärmesonde,
- Fig. 2 zeigt eine vereinfachte schematische Querschnittsdarstellung des Endstücks (Fußstücks) des Rohrstrangs,
- Fig. 3 zeigt eine vereinfachte schematische Querschnittsdarstellung eines Abschnitts des Rohrstrangs,
- Fig. 4 zeigt eine vereinfachte schematische Darstellung einer erfindungsgemäßen Vorrichtung,
- Fig. 5 zeigt eine vereinfachte schematische Darstellung einer erfindungsgemäßen Vorrichtung,
- Fig. 6 zeigt eine vereinfachte schematische Darstellung des Kopfstücks der Erdwärmesonde.

### DETAILLIERTE BESCHREIBUNG DER AUSFÜHRUNGSBEISPIELE

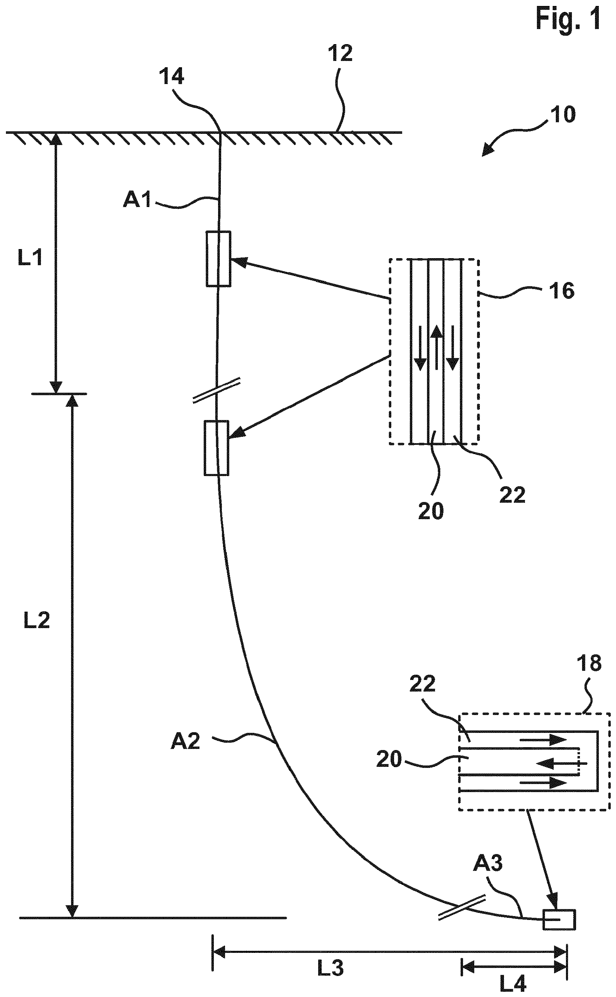

Figur 1 zeigt eine vereinfachte schematische Darstellung einer Erdwärmesonde 10. Das Kopfstück (Anfangsstück) 14 der Erdwärmesonde 10 setzt an der Erdoberfläche 12 an. Ausgehend von der Erdoberfläche 12 erstreckt sich in im Wesentlichen vertikaler Richtung ein erster Abschnitt A1 der Erdwärmesonde 10 über eine Länge L1.

Anschließend an den ersten Abschnitt A1 umfasst die Erdwärmesonde 10 einen zweiten Abschnitt A2. Der zweite Abschnitt A2 weist eine Krümmung auf. Der Radius der Krümmung des zweiten Abschnitts A2 beträgt zumindest 600 m. Durch die Krümmung weist der zweite Abschnitt A2 eine Länge L2 entlang der vertikalen Richtung auf. Die Summe der Längen L1 und L2 kann zumindest 100 m betragen, insbesondere auch mehr als 500 m, weiter insbesondere auch mehr als 2000 m, weiter insbesondere auch mehr als 4000 m, weiter insbesondere zwischen 5000 m und 6000 m oder mehr. Die vergrößerte Darstellung in dem Ausschnitt 16 zeigt die Flussrichtungen des Arbeitsmediums innerhalb des Rohrstrangs im ersten und zweiten Abschnitt A1, A2. Der Rohrstrang umfasst ein zentrales Steigrohr 20 und ein koaxial angeordnetes Fallrohr 22.

Insbesondere der erste Abschnitt A1 und/oder der zweite Abschnitt A2 des Rohrstrangs können einen kohlenstofffaserverstärkten Werkstoff umfassen oder aus diesem hergestellt sein. Im ersten und zweiten Abschnitt A1, A2 sind die mittleren Temperaturen des Arbeitsmediums im Steigrohr 20 deutlich unterschiedlich zu den mittleren Temperaturen des Arbeitsmediums im Fallrohr 22. Deshalb ist in dem ersten und zweiten Abschnitt A1, A2 eine besonders gute thermische Isolierung vorteilhaft. Kohlenstofffaserverstärkter Werkstoff hat (z.B. gegenüber Stahl) deutlich verbesserte thermische Isolationseigenschaften. Dadurch kann ein Wärmeverlust des rückgeführten Arbeitsmediums verhindert oder zumindest verringert werden, so dass die Effizienz des Prozesses erhöht wird. Zudem kann mittels des kohlenstofffaserverstärkten Werkstoffs das Gewicht dieser Abschnitte verringert werden.

Die Erdwärmesonde 10 umfasst an den zweiten Abschnitt A2 anschließend einen dritten Abschnitt A3. Der dritte Abschnitt A3 ist im Wesentlichen horizontal angeordnet. Der dritte Abschnitt A3 weist eine horizontale Länge L4 auf. Der Rohrstrang erstreckt sich relativ zum Kopfstück 14 der Erdwärmesonde 10 in horizontaler Richtung über eine Länge L3. Da der zweite Abschnitt A2 eine Krümmung aufweist, ist die Länge L3 größer als die Länge L4. Die Länge L3 kann zumindest 100 m betragen, insbesondere auch mehr als 500 m, weiter insbesondere auch mehr als 1000 m, weiter insbesondere auch mehr als 2000 m, weiter insbesondere im Wesentlichen 3000 m oder mehr. Die horizontale Ausdehnung des Rohrstrangs ist besonders vorteilhaft, da die Temperatur des umliegenden Erdreichs mit zunehmender Entfernung von der Erdoberfläche 12 zunimmt. Durch die horizontale Anordnung des dritten Abschnitts A3 des Rohrstrangs kann ein genügender Wärmeeintrag aus dem umliegenden Erdreich in den Rohrstrang gewährleistet werden, um das Arbeitsmedium ausreichend zu erwärmen, sodass es verdampft und die gewünschte Temperatur annimmt. Das verdampfte Arbeitsmedium wird dann durch das Steigrohr 20 zurückgeführt.

In der vergrößerten Darstellung in dem Ausschnitt 18 ist das Endstück (Fußstück) 40 des Rohrstrangs dargestellt. Das koaxial um das Steigrohr 20 angeordnete Fallrohr 22 ist mit dem Steigrohr 20 fluidisch verbunden. Dadurch erfolgt im Bereich des Endstücks 40 des Rohrstrangs die Umkehrung der Flussrichtung, sobald das Arbeitsmedium von dem Fallrohr 22 in das Steigrohr 20 eintritt.

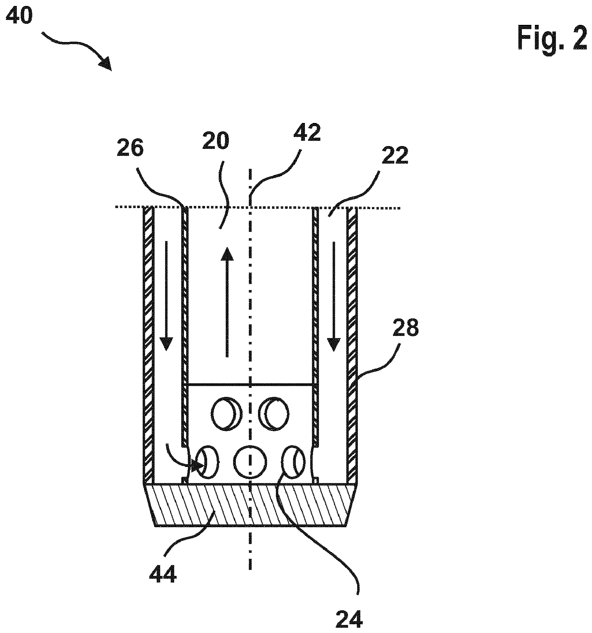

Figur 2 zeigt eine vereinfachte schematische Querschnittsdarstellung des Endstücks 40 des Rohrstrangs. Das Endstück 40 des Rohrstrangs weist eine Kreissymmetrie auf, was durch die Strich-Punkt-Linie 42 angezeigt ist. Das Endstück 40 weist zudem eine Bodenplatte 44 auf, die angefast ist. Die Bodenplatte 44 erleichtert das Einführen des Rohrstrangs in das Bohrloch. Das Endstück 40 weist in der Nähe der Bodenplatte 44 mehrere Überströmöffnungen 24 auf, durch die das Fallrohr 22 mit dem Steigrohr 20 fluidisch verbunden ist. Die Überströmöffnungen 24 sind strömungsoptimiert umfänglich am Steigrohr 20 angeordnet. Die Überströmöffnungen 24 können abgerundet sein, um den Strömungswiderstand zu verringern. Eine Gesamtöffnungsfläche der Überströmöffnungen 24 kann kleiner als eine Querschnittsfläche des Steigrohrs 20 sein. So kann das Arbeitsmedium von dem Fallrohr 22 in das Steigrohr 20 eintreten. Zwischen dem Steigrohr 20 und dem Fallrohr 22 weist der Rohrstrang einen Ringspalt 26 auf. Innerhalb des Ringspalts 26 kann der Rohrstrang Abstandshalter vorsehen, sodass die koaxiale Anordnung des Fallrohrs 22 um das Steigrohr 20 gewährleistet ist. An der Außenseite weist das Fallrohr 22 eine Doppelwandung 28 auf. Die Doppelwandung 28 kann eingerichtet sein, um eine Leckage des Arbeitsmediums aus dem Rohrstrang in das Bohrloch zu verhindern. Der Ringspalt 26 gewährleistet die thermische Isolierung des Steigrohrs 20 gegenüber dem Fallrohr 22. Um die thermische Isolierung weiter zu verbessern, kann der Ringspalt 26 weitere thermische Isolationsmaterialien und/oder entsprechende Beschichtungen aufweisen. Insbesondere können die Oberflächen des Ringspalts 26, des Steigrohrs 20, des Fallrohrs 22 und der Doppelwandung 28 beschichtet und/oder verspiegelt sein.

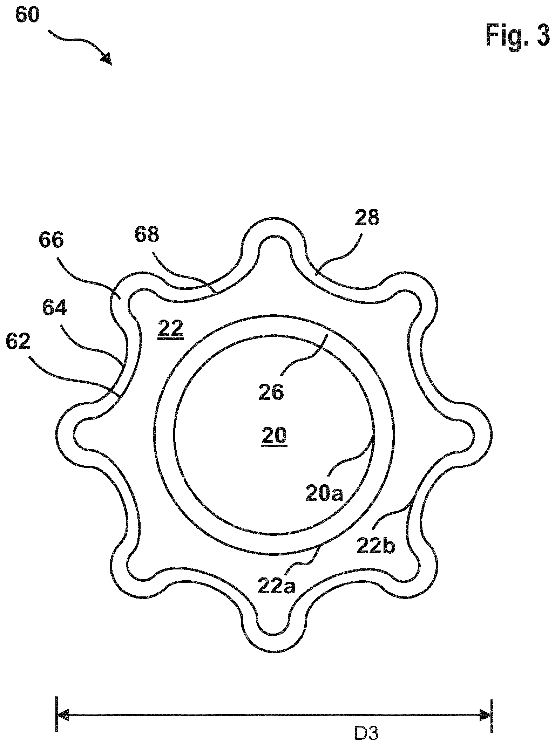

Figur 3 zeigt eine vereinfachte schematische Querschnittsdarstellung des Rohrstrangs im dritten Abschnitt A3. Das Steigrohr 20 weist eine kreisrunde Außenquerschnittskontur 20a auf. Das Fallrohr 22 ist koaxial zum Steigrohr 20 angeordnet und weist eine korrespondierende kreisrunde Innenquerschnittskontur 22a auf. Zwischen der Innenquerschnittskontur 22a des Fallrohrs 22 und der Außenquerschnittskontur 20a des Steigrohrs 20 erstreckt sich der Ringspalt 26. Die Außenquerschnittskontur 22b des Fallrohrs 22 entspricht einer Sternform mit abgerundeten Zacken (Vorsprüngen) 66 und Senken (Einbuchtungen) 68. Die Außenwand, entsprechend der Außenquerschnittskontur 22b des Fallrohrs 22, bildet die Innenwand 62 der Doppelwand 28. Die Doppelwand 28 umfasst zudem eine bezüglich der Form zur Innenwand 62 korrespondierende Außenwand 64, sodass die Innenwand 62 und die Außenwand 64 einen konstanten Abstand voneinander aufweisen. Durch die besondere Form der Doppelwand 28 bzw. der Außenquerschnittskontur 22b des Fallrohrs 22 wird die Außenoberfläche des Rohrstrangs in diesem Abschnitt effektiv enorm vergrößert. Da die Wärmeleitung zwischen zwei Körpern, die unterschiedliche Temperaturen aufweisen, von der effektiven Oberfläche abhängt, durch die der Wärmestrom stattfindet, kann somit die Wärmeleitung von dem den Rohrstrang umgebenden Erdreich in den Rohrstrang vergrößert werden. Deshalb verbessert die Form der Außenquerschnittskontur 22b des Fallrohrs 22 die Erhitzung des Arbeitsmediums unter Verwendung der geothermischen Energie, die durch das Erdreich zur Verfügung gestellt wird. Andererseits ist es wünschenswert, dass die Wärmeleitung zwischen Fallrohr 22 und Steigrohr 20 möglichst gering ist, damit das einmal erhitzte Arbeitsmedium seine Temperatur möglichst bis zur Verwendung an der Erdoberfläche 12 konstant beibehält. Deshalb wäre eine Veränderung der Form der Innenquerschnittskontur 22a des Fallrohrs 22 kontraproduktiv. Die Außenquerschnittskontur 22b kann natürlich auch andere Formen mit effektiv vergrößerten Außenoberflächen (verglichen mit kreisrunden Außenkonturen) aufweisen.

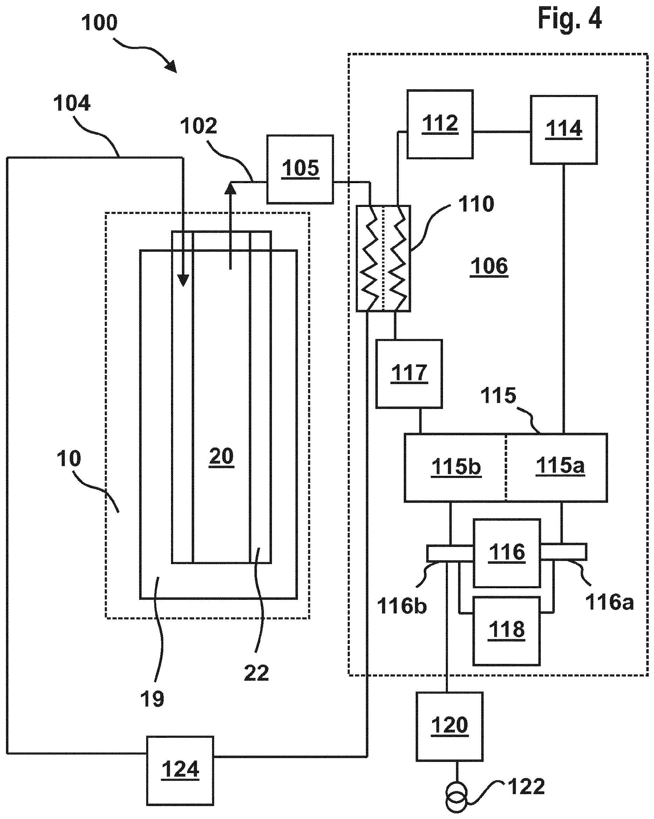

Figur 4 zeigt eine vereinfachte schematische Darstellung einer Vorrichtung 100 zur Erzeugung elektrischer Energie aus geothermischer Energie. Da ist die Erdwärmesonde 10 mit dem Bohrloch 19 und dem Rohrstrang umfassend das Steigrohr 20 und das Fallrohr 22. Das in der Erdwärmesonde 10 erhitzte Arbeitsmedium wird über die Zuführleitung 102 einer Zirkulationspumpe 105 zugeführt. Anschließend wird das erste Arbeitsmedium zum (ersten) Wärmetauscher 110 geleitet. Im Wärmetauscher 110 wird die Wärme des Arbeitsmediums der Erdwärmesonde 10 genutzt, um ein zweites Arbeitsmedium, das in dem Energiewandler 106 genutzt wird, zu erhitzen. Der Wärmetauscher 110 kann eingerichtet sein, dem ersten Arbeitsmedium derart Wärme zu entziehen, dass sich die Temperatur des ersten Arbeitsmediums um im Wesentlichen etwa 30°C verringert. Die Vorrichtung 100 kann auch mehrere Wärmetauscher 110 umfassen, die korrespondierend ausgebildet sein können. Die mehreren Wärmetauscher können einer Parallelschaltung entsprechen oder kaskadiert (nacheinander) angeordnet sein. Die Anzahl der Wärmetauscher kann insbesondere so sein, dass das erste Arbeitsmedium nach Durchgang aller Wärmetauscher eine Temperatur von im Wesentlichen 0°C oder darunter aufweist.

Anschließend kann das erste Arbeitsmedium der Erdwärmesonde 10 in einem Speicher 124 zwischengespeichert werden. Mittels des Speichers 124 kann auf die Menge des in der Erdwärmesonde 10 befindlichen Arbeitsmediums Einfluss genommen werden. Von dem Speicher 124 aus wird das erste Arbeitsmedium dann mittels der Zuführleitung 104 wieder der Erdwärmesonde 10 zugeführt.

Das in dem ersten Wärmetauscher 110 erhitzte zweite Arbeitsmedium kann einem Trockner 112 zugeführt werden, um dem zweiten Arbeitsmedium noch enthaltene Restfeuchte zu entziehen. Anschließend kann das zweite Arbeitsmedium einem Drehzahlregler (Drossel) 114 zugeführt werden. Der Drehzahlregler 114 kann eine Durchflussmenge des zweiten Arbeitsmediums beeinflussen. Das zweite Arbeitsmedium wird anschließend dem Expansionsventil 115 zugeführt. Das Expansionsventil 115 umfasst eine Hochdruckseite 115a und eine Niederdruckseite 115b. Ausgehend von der Hochdruckseite 115a des Expansionsventils 115 wird das zweite Arbeitsmedium anschließend der Expansionsmaschine 116 (Kolbenmaschine) zugeführt. Die Expansionsmaschine 116 umfasst einen elektronischen Einlass 116a und einen elektronischen Auslass 116b. Der Energiewandler 106 umfasst zudem eine vollelektronische Motorsteuerung 118. Die vollelektronische Motorsteuerung 118 stellt Steuersignale für den elektronischen Einlass 116a und den elektronischen Auslass 116b bereit. Die vollelektronische Motorsteuerung 118 kann auch eingerichtet sein, um Steuersignale derart bereitzustellen, dass ein Arbeitsweg des Kolbens veränderbar ist. Der elektronische Einlass 116a und der elektronische Auslass 116b umfassen jeweils ein Ventil, mittels dem das zweite Arbeitsmedium zumindest einem Zylinder in der Expansionsmaschine 116 zugeführt werden kann oder mittels dem das zweite Arbeitsmedium aus dem Zylinder entnommen werden kann. Das zweite Arbeitsmedium wird zumindest einem Zylinder der Expansionsmaschine 116 mit einem zunächst verhältnismäßig hohen Druck zugeführt. Innerhalb des Zylinders verrichtet das zweite Arbeitsmedium Arbeit an einem Kolben, wodurch sich das von diesem Teil des zweiten Arbeitsmediums eingenommene Volumen vergrößert, sodass der Druck dieses Teils des zweiten Arbeitsmediums sinkt und sich dieser Teil abkühlt. Anschließend wird der "verbrauchte Anteil" des zweiten Arbeitsmediums durch den elektronischen Auslass 116b der Expansionsmaschine 116 abgelassen. Ausgehend vom elektronischen Auslass 116b wird das zweite Arbeitsmedium der Niederdruckseite 115b des Expansionsventils 115 zugeführt. Anschließend kann das zweite Arbeitsmedium in einem Speicher 117 zwischengespeichert werden. Ausgehend vom Speicher 117 wird es zur erneuten Erwärmung wieder dem ersten Wärmetauscher 110 zugeführt.

Sollte am elektronischen Einlass 116a und am elektronischen Auslass 116b ein gleich großer Druck herrschen, kann der Kolben innerhalb eines Zylinders der Expansionsmaschine 116 zum Stillstand kommen. Mittels des Expansionsventils 115 wird eine Druckdifferenz zwischen dem elektronischen Einlass 116a und dem elektronischen Auslass 116b der Expansionsmaschine 116 gewährleistet. Zusätzlich kann die Kurbelwelle, mit der der Kolben der Expansionsmaschine 116 gekoppelt ist, ein Schwungrad vorsehen, dass mittels korrespondierender Magnete die Bewegung des Kolbens über einen solchen kritischen Punkt hinweg unterstützen kann. Bei den Magneten kann es sich um Neodym-Magnete handeln.

Die Expansionsmaschine 116 ist mit einer entsprechenden Kupplung mit einem Generator 120 gekoppelt. Der Generator 120 ist eingerichtet, basierend auf der durch die Zylinderbewegung der Expansionsmaschine 116 mechanisch angetriebenen Kupplung, elektrische Energie zu erzeugen. Die elektrische Energie kann einem Transformator 122 zugeführt werden und anschließend in einem herkömmlichen Stromnetz (Hochspannungsnetz) verwendet werden. Der Generator 120 und/oder der Transformator 122 können Bestandteile des Energiewandlers 106 sein. Die vollelektronische Motorsteuerung 118 kann auch eingerichtet sein, um Kontrollsignale von dem Trockner 112, dem Drehzahlregler 114, dem Expansionsventil 115, dem Generator 120 und/oder dem Speicher 117 zu erhalten und um in Folge dessen ausgegebene Steuersignale anzupassen. Insbesondere kann die vollelektronische Motorsteuerung 118 eingerichtet sein, basierend auf den Kontrollsignalen, die Druckdifferenz zwischen elektronischem Einlass 116a und elektronischem Auslass 116b zu gewährleisten.

Der Trockner 112, der Drehzahlregler 114, das Expansionsventil 115, der Speicher 117, die vollelektronische Motorsteuerung 118, der Generator 120, der Speicher 124 und der zweite Wärmetauscher 126 sind optionale Komponenten der Vorrichtung 100.

Erfindungsgemäß handelt es sich bei dem Arbeitsmedium der Erdwärmesonde 10 um Wasser, dem Additive zugesetzt sein können. Erfindungsgemäß handelt es sich bei dem zweiten Arbeitsmedium, dass in dem Energiewandler 106 genutzt wird, um Kohlendioxid, dem Additive zugesetzt sein können.

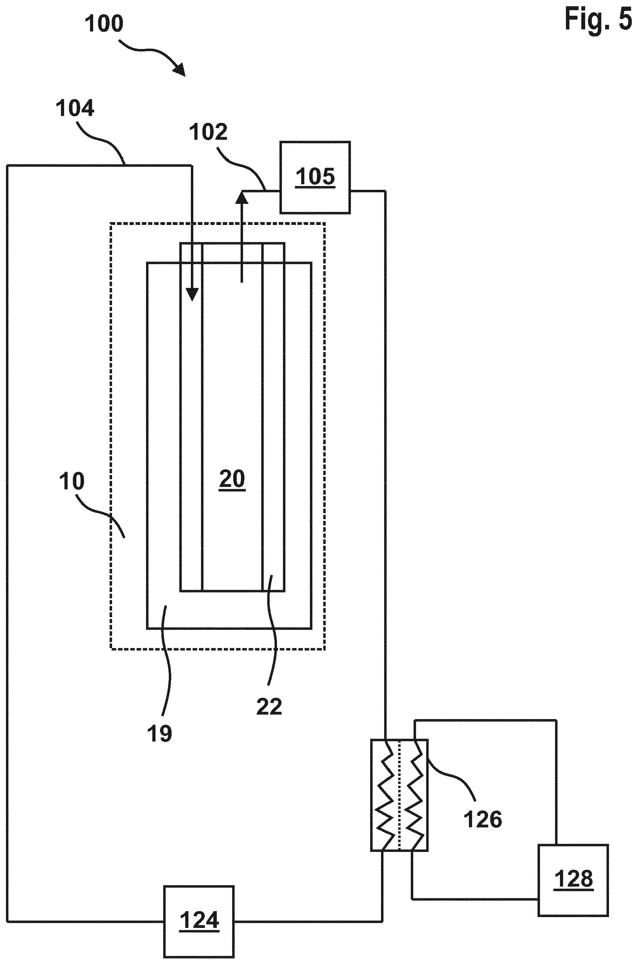

Figur 5 zeigt eine vereinfachte schematische Darstellung einer Vorrichtung 100 zur Gewinnung von Wärme aus geothermischer Energie. Die Vorrichtung 100 entspricht im Wesentlichen der in Fig. 4 gezeigten Ausführungsform. Allerdings umfasst die Vorrichtung 100 anstatt eines Energiewandlers 106 bzw. einer Expansionsmaschine 116 einen (zweiten) gegebenenfalls anders ausgestalteten Wärmetauscher 126. Das erste Arbeitsmedium der Erdwärmesonde 10 wird, ausgehend von der Zirkulationspumpe 105, dem Wärmetauscher 126 zugeführt. Dort kann die Wärme des Arbeitsmediums genutzt werden, um einen geeigneten Energieträger zu erwärmen, der aus dem Wärmetauscher 126 dem Fernwärmenetz 128 zugeführt wird. Somit ermöglicht die Vorrichtung 100 sowohl die Gewinnung elektrischer als auch thermischer Energie.

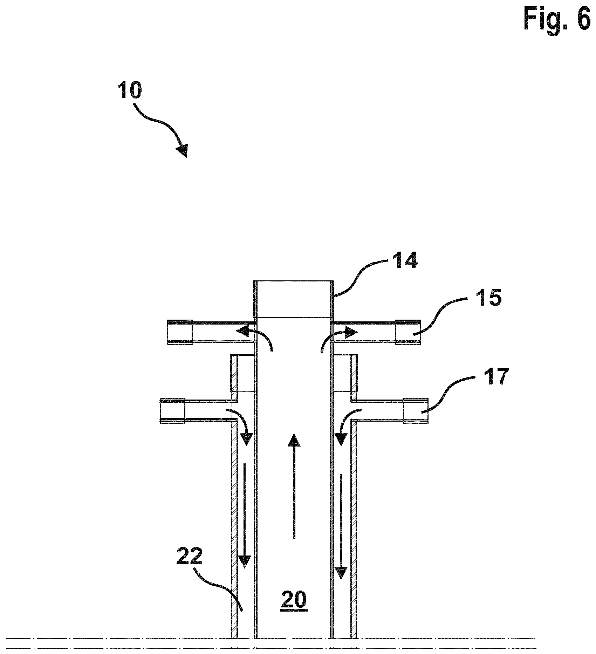

Figur 6 zeigt eine vereinfachte schematische Darstellung des Kopfstücks (Anfangsstücks) 14 der Erdwärmesonde 10. Das Kopfstück 14 umfasst mehrere Auslässe 15, durch die das erhitzte Arbeitsmedium aus dem zentralen Steigrohr 20 aus der Erdwärmesonde 10 entweichen kann. Die mehreren Auslässe 15 sind dabei umfänglich am Kopfstück 14 angeordnet und ermöglichen so ein strömungsoptimiertes Entweichen des Arbeitsmediums. Die Übergänge von dem Steigrohr 20 zu den Auslässen 15 können abgerundet sein, um den Strömungswiderstand zu verringern. Eine Gesamtquerschnittsfläche der Auslässe 15 kann größer sein als eine Querschnittsfläche des Steigrohrs 20. Die Auslässe 15 sind mit der Zuführleitung 102 gekoppelt. Das Kopfstück 14 kann zumindest zwei Auslässe 15 umfassen, insbesondere auch drei Auslässe 15, weiter insbesondere vier Auslässe 15, weiter insbesondere sechs Auslässe 15 oder mehr.

Das Kopfstück 14 umfasst auch mehrere Einlässe 17, durch die das (kalte bzw. abgekühlte) Arbeitsmedium in das koaxial angeordnete Fallrohr 22 der Erdwärmesonde 10 eintreten kann. Die mehreren Einlässe 17 sind dabei umfänglich am Kopfstück 14 angeordnet und ermöglichen so ein strömungsoptimiertes Einleiten des Arbeitsmediums. Die Übergänge von den Einlässen 17 zum koaxial angeordneten Fallrohr 22 können abgerundet sein, um den Strömungswiderstand zu verringern. Die Einlässe 17 sind mit der Zuführleitung 104 gekoppelt. Das Kopfstück 14 kann zumindest zwei Einlässe 17 umfassen, insbesondere auch drei Einlässe 17, weiter insbesondere vier Einlässe 17, weiter insbesondere sechs Einlässe 17 oder mehr.

Die Erfindung betrifft insbesondere folgende Gegenstände:
A. Erdwärmesonde umfassend einen koaxialen Rohrstrang, wobei der koaxiale Rohrstrang zumindest teilweise von einem Arbeitsmedium durchströmt ist, und wobei zumindest ein Teil des Rohrstrangs einen kohlenstofffaserverstärkten Werkstoff umfasst.
B. Erdwärmesonde nach A, wobei der koaxiale Rohrstrang zumindest einen Abschnitt umfasst, der eine sternförmige Querschnittsfläche mit abgerundeten Zacken und Senken aufweist.
C. Erdwärmesonde nach A oder B, wobei der koaxiale Rohrstrang zumindest einen ersten Abschnitt und einen zweiten Abschnitt umfasst, wobei der erste Abschnitt im Wesentlichen vertikal angeordnet ist und den kohlenstofffaserverstärkten Werkstoff umfasst, und wobei der zweite Abschnitt im Wesentlichen horizontal angeordnet ist.
D. Erdwärmesonde nach B, wobei der erste Abschnitt und der zweite Abschnitt durch einen zwischenliegenden, eine Krümmung aufweisenden, dritten Abschnitt des koaxialen Rohrstrangs verbunden sind.
E. Erdwärmesonde nach A bis D, wobei der koaxiale Rohrstrang zumindest ein zentrales Steigrohr und ein koaxial angeordnetes Fallrohr umfasst.
F. Erdwärmesonde nach A bis E, wobei die Erdwärmesonde in einem Bohrloch angeordnet ist und in diesem schwimmend gelagert ist.
G. Energiewandler umfassend zumindest einen Wärmetauscher und zumindest eine Expansionsmaschine, wobei der Wärmetauscher von einem ersten und einem zweiten Arbeitsmedium durchströmt wird, wobei die Expansionsmaschine zumindest einen Zylinder mit einem beweglich gelagerten Kolben umfasst, wobei der Kolben durch das zweite Arbeitsmedium bewegt wird.
H. Energiewandler nach G, wobei der Energiewandler eine vollelektronische Motorsteuerung umfasst, wobei die vollelektronische Motorsteuerung zumindest eingerichtet ist, um einen elektronischen Einlass und einen elektronischen Auslass des Zylinders zu steuern.
I. Energiewandler nach G oder H, wobei der Energiewandler eingerichtet ist, um mittels Magnetismus einen Stillstand des Kolbens in Folge eines kritischen Betriebszustands des Kolbens zu verhindern.
J. Energiewandler nach G bis I, wobei das zweite Arbeitsmedium derart innerhalb des Wärmetauschers erhitzt wird und derart in der Expansionsmaschine durch Verrichtung von Arbeit an dem Kolben abgekühlt wird und eine Wegstrecke des Kolbens derart eingerichtet ist, dass ein mittlerer Kolbendruck wenigstens 30 bar beträgt.
K. Energiewandler nach G bis J, wobei der Kolben zumindest einen geschlossenen Kolbenring aufweist oder wobei der Kolben derart an den Zylinder angepasst ist, dass der Kolben keinen Kolbenring aufweist.
L. Vorrichtung zur Erzeugung elektrischer Energie oder zur Gewinnung von Wärme aus geothermischer Energie, umfassend zumindest eine Erdwärmesonde nach 1 bis 6 und zumindest einen Energiewandler nach G bis K.
M. Verfahren zur Erzeugung elektrischer Energie oder zur Gewinnung von Wärme aus geothermischer Energie unter Verwendung einer Vorrichtung gemäß L.

## Patentansprüche

1. Energiewandler (106) umfassend zumindest einen Wärmetauscher (110) und zumindest eine Expansionsmaschine (116), wobei der Wärmetauscher (110) von einem ersten und einem zweiten Arbeitsmedium durchströmt wird, wobei die Expansionsmaschine (116) zumindest einen Zylinder mit einem beweglich gelagerten Kolben umfasst, wobei der Kolben durch das zweite Arbeitsmedium bewegt wird.

2. Energiewandler (106) nach Anspruch 1, wobei der Energiewandler (106) eine vollelektronische Motorsteuerung umfasst, wobei die vollelektronische Motorsteuerung zumindest eingerichtet ist, um einen elektronischen Einlass (116a) und einen elektronischen Auslass (116b) des Zylinders zu steuern.

3. Energiewandler (106) nach Anspruch 2, wobei der elektronische Einlass (116a) ein Ventil umfasst, mittels dem das zweite Arbeitsmedium dem zumindest einen Zylinder zuführbar ist, und wobei der elektronische Auslass (116b) ein Ventil umfasst, mittels dem das zweite Arbeitsmedium dem zumindest einen Zylinder entnehmbar ist.

4. Energiewandler (106) nach Anspruch 3, wobei die vollelektronische Motorsteuerung dazu eingerichtet ist, Steuersignale bereitzustellen, basierend auf denen das Ventil den elektronischen Einlass (116a) und/oder den elektronischen Auslass (116b) freigibt.

5. Energiewandler (106) nach einem der Ansprüche 2 bis 4, wobei die vollelektronische Motorsteuerung dazu eingerichtet ist, eine zurücklegbare Wegstrecke des Kolbens festzulegen.

6. Energiewandler (106) nach einem der Ansprüche 2 bis 5, wobei eine Druckdifferenz zwischen dem elektronischen Einlass (116a) und dem elektronischen Auslass (116b) mittels eines Expansionsventils (115) gewährleistet ist.

7. Energiewandler (106) nach einem der Ansprüche 1 bis 6, wobei der Energiewandler (106) eingerichtet ist, um mittels Magnetismus einen Stillstand des Kolbens in Folge eines kritischen Betriebszustands des Kolbens zu verhindern.

8. Energiewandler (106) nach Anspruch 7, wobei der Kolben mit einer Kurbelwelle mechanisch verbunden ist, die ein Schwungrad umfasst, an dem ein erster Magnet angeordnet ist, und ein zweiter Magnet an einem Gehäuseteil des Energiewandlers (106) bzw. der Expansionsmaschine (116) angeordnet ist, wobei der erste Magnet und der zweite Magnet so zusammenwirken, dass eine Bewegung der Kurbelwelle und/oder des Kolbens unterstützt wird.

9. Energiewandler (106) nach einem der Ansprüche 1 bis 8, wobei das zweite Arbeitsmedium derart innerhalb des Wärmetauschers (110) erhitzt wird und derart in der Expansionsmaschine (116) durch Verrichtung von Arbeit an dem Kolben abgekühlt wird und eine Wegstrecke des Kolbens derart eingerichtet ist, dass ein mittlerer Kolbendruck wenigstens 30 bar beträgt.

10. Energiewandler (106) nach einem der Ansprüche 1 bis 9, wobei der Kolben zumindest einen geschlossenen Kolbenring aufweist oder wobei der Kolben derart an den Zylinder angepasst ist, dass der Kolben keinen Kolbenring aufweist.

11. Energiewandler (106) nach einem der Ansprüche 1 bis 10, wobei das zweite Arbeitsmedium Kohlendioxid umfasst.

12. Energiewandler (106) nach einem der Ansprüche 1 bis 11, wobei mehrere Wärmetauscher (110) vorgesehen sind, deren Anzahl so ist, dass das erste Arbeitsmedium nach Durchgang aller Wärmetauscher (110) eine Temperatur von im Wesentlichen 0 °C oder darunter aufweist.

13. Vorrichtung (100) zur Erzeugung elektrischer Energie oder zur Gewinnung von Wärme aus geothermischer Energie, umfassend
zumindest eine Erdwärmesonde (10) mit einem koaxialen Rohrstrang, wobei der koaxiale Rohrstrang zumindest teilweise von einem Arbeitsmedium durchströmt ist, und wobei zumindest ein Teil des Rohrstrangs einen kohlenstofffaserverstärkten Werkstoff umfasst,
und zumindest einen Energiewandler (106) nach einem der Ansprüche 1 bis 12.

14. Verfahren zur Erzeugung elektrischer Energie oder zur Gewinnung von Wärme aus geothermischer Energie unter Verwendung einer Vorrichtung (100) gemäß Anspruch 12.

15. Verfahren nach Anspruch 14, umfassend die folgenden Schritte:
Erhitzen des zweiten Arbeitsmedium in dem zumindest einen Wärmetauscher (110) derart, dass es verdampft, wobei ein Druck von mehr als 20 bar entsteht,
Leiten des verdampften zweiten Arbeitsmedium zur Expansionsmaschine (116),
Einlassen des verdampften zweiten Arbeitsmediums durch einen elektronischen Einlass (116a) in einen Zylinderraum der Expansionsmaschine (116), wobei das zweite Arbeitsmedium durch den Druck einen in dem Zylinderraum befindlichen Kolben bewegt,
Entnehmen des zweiten Arbeitsmediums durch einen elektronischen Auslass aus dem Zylinderraum, wobei das zweite Arbeitsmedium einen Restdruck von mehr als 5 bar und/oder eine Temperatur von im Wesentlichen 0 °C oder weniger aufweist,
Zurückführen des zweiten Arbeitsmediums zu dem zumindest einen Wärmetauscher (110).
